# EUROPÄISCHE PATENTSCHRIFT

(11) **EP 1 611 928 B1**
(45) Veröffentlichungstag und Bekanntmachung des Hinweises auf die Patenterteilung: **11.10.2006**
(21) Anmeldenummer: 04015627.5
(22) Anmeldetag: 02.07.2004
(51) Int. Cl.: A63C 5/044, A63C 5/12

(54) **Lauffläche für ein Wintersportgerät**
Running sole for wintersport apparatus
Semelle pour appareil de sports d'hiver

(43) Veröffentlichungstag der Anmeldung: 04.01.2006
(73) Patentinhaber: IMS KUNSTSTOFF AG, 3076 Worb (CH)
(72) Erfinder: Geissbühler, Urs, 3604 Thun (CH)
(74) Vertreter: Hepp, Dieter

(56) Entgegenhaltungen:
- EP-A- 0 341 236
- WO-A-99/50367
- DE-A- 4 022 286
- US-A- 4 705 815

## Beschreibung

Die Erfindung betrifft eine Lauffläche für ein Wintersportgerät, ein Wintersportgerät mit einer solchen Lauffläche, eine Zusammensetzung für die Herstellung einer solchen Lauffläche sowie die Verwendung eines oder mehrerer Fullerene als Zusatz zu einer solchen Lauffläche gemäss der Oberbegriffe der unabhängigen Patentansprüche.

Laufflächen für Wintersportgeräte wie z.B. alle Arten von Skis (z.B. cross-country Skis, Alpine Skis, Telemark Skis), Snowboards, Skiboards, Schlitten, etc., im allgemeinen alle Laufflächen, welche zum Gleiten auf Schnee oder Eis bestimmt sind, werden vorzugsweise hergestellt aus hydrophobem Plastik, beispielsweise Polyethylen (PE). Der Mechanismus des Gleitens derartiger Laufflächen auf Schnee und/oder Eis wird derzeit nicht abschliessend verstanden. Man geht jedoch davon aus, dass beim Kontakt von Rauhigkeitsspitzen der Lauffläche mit Schnee- und/oder Eiskristallen Reibungswärme erzeugt wird, welche zum lokalen Schmelzen von Schnee- und/oder Eiskristallen führt. Das lokal gebildete Schmelzwasser führt zu hydrodynamischen Schmierverhältnissen, wodurch sich die beim Gleiten auf Schnee erzielbaren, kinetischen Reibungskoeffizienten von oftmals 0.02 - 0.05 erklären lassen (Schimbo, M.; 1972; *Friction on snow of ski soles, unwaxed and waxed, Scientific Study of Skiing in Japan;* Society of Ski Science; Hitachi, Tokyo; Seiten 99-112). Ohne hydrodynamische Schmierverhältnisse erzielbare, kinetische Reibungskoeffizienten sind regelmässig etwa um den Faktor 10 grösser.

Es hat sich in der Praxis gezeigt, dass bei höheren Geschwindigkeiten das lokal gebildete Schmelzwasser die Tendenz hat, sich über grössere Bereiche der Lauffläche zu verteilen, was zu einem unerwünschten, die Gleitgeschwindigkeit vermindernden "Saugeffekt" führen kann. Durch Beimischung von Materialien wie zum Beispiel Russ und/oder Graphit, bekannt beispielsweise aus CH 657 993 A und CH 660 018 A, kann die Gleitfähigkeit der Lauffläche verbessert und der "Saugeffekt" reduziert bzw. verhindert werden. Man geht derzeit davon aus, dass die verbesserten Gleiteigenschaften und die Verminderung/Vermeidung des "Saugeffektes" auf einer durch die genannten Zusätze erzielbaren, gegenüber einer unmodifizierten Kunststoffmatrix erhöhten Wärmeleitfähigkeit beruhen.

Auch ist es aus EP 1 053 768 bekannt, Bor, Borverbindungen und Nitride zum Zwecke der Verbesserung der Gleiteigenschaften einzusetzen. Ferner ist aus US 6,063,739 der Zusatz von Fluorgraphit bekannt.

Nachteilig an den genannten, bekannten Zusätzen sind die relativ hohen, benötigten Materialmengen: So werden beispielsweise Russ (z.B. Industrierusse der "Printex"-Serie (Degussa), typischerweise mit einem toluol-extrahierbaren Anteil von weniger bspw. 0.1%) oder Graphit in Anteilen von etwa 5 Gew.-% bis etwa 30 Gew.-% zugesetzt; im Falle des Zusatzes von Russ wird gemeinhin erst ab einer Zusatzmenge von mehr als 3-4 Gew.-% überhaupt ein Effekt erkennbar. Die Beifügung von Zusätzen in Anteilen von bis zu 30 Gew.-% ist jedoch aufgrund einer hierdurch bewirkten Verschlechterung der mechanischen Eigenschaften der Kunststoffmatrix nachteilig. Zudem ist insbesondere durch den Zusatz von Graphit, Russ u. dgl. in derart grossen Mengen eine Erzielung von nicht-schwarzen Oberflächen nicht möglich.

Es ist daher eine Aufgabe der Erfindung, die Nachteile des bekannten zu vermeiden, insbesondere also eine Lauffläche für ein Wintersportgerät zu schaffen, welche bei vergleichbaren, insbesondere gegenüber dem Stand der Technik weiter verbesserten Gleiteigenschaften nur einen geringeren Anteil eines die Gleiteigenschaften verbessernden Zusatzstoffes verfügt. Darüber hinaus soll eine derartige Lauffläche eine nicht-schwarze Farbgestaltung ermöglichen, möglichst einfach herstellbar und verarbeitbar sein sowie die gängigen Haltbarkeits-Anforderungen der Ski-Industrie erfüllen.

Die genannte Aufgabe wird erfüllt durch eine Lauffläche für ein Wintersportgerät, ein Wintersportgerät mit einer solchen Lauffläche, eine Zusammensetzung für die Herstellung einer solchen Lauffläche sowie die Verwendung eines oder mehrerer Fullerene als Zusatz zu einer solchen Lauffläche gemäss der kennzeichnenden Teile der unabhängigen Patentansprüche. Derartige Laufflächen sind typischerweise hergestellt aus und/oder im beinhalten im wesentlichen einen Kunststoff, insbesondere Polyethylen (PE).

Die Erfindung betrifft Laufflächen für Wintersportgeräte wie z.B. alle Arten von Skis (z.B. cross-country Skis, Alpine Skis, Telemark Skis), Snowboards, Skiboards, Schlitten, etc., im allgemeinen alle Laufflächen, welche zum Gleiten auf Schnee oder Eis bestimmt sind, wobei die Lauffläche einen Zusatz von mindestens einem oder mehreren Fulleren(en) enthält.

Unter Fullerenen werden hier und im folgenden alle Vertreter der Klasse von insbesondere ausschliesslich aus Kohlenstoff bestehenden, käfigartigen, aus Fünf- und Sechsringen aufgebauten Makromolekülen verstanden. Die bekanntesten und stabilsten Vertreter dieser Klasse sind insbesondere C₆₀ (Buckminster Fulleren, welches im Rahmen der Erfindung bevorzugt (auch in Mischungen mit weiteren Fullerenen) verwendet werden kann), C₇₀, C₇₆, C₈₀, C₈₂, C₈₄, C₈₆, C₉₀, C₉₄. Auch Fulleride (Fullerene mit negativer Ladung auf dem Käfig), endo- und exohedrale Fullerene (Fullerene mit Gastmolekülen innerhalb oder ausserhalb des Käfigs) werden hier und im folgenden unter Fullerenen verstanden. Ebenso sind Heterofullerene (Fullerene mit eingebauten Nicht-Metallatomen in der Käfigstruktur) bzw. Metcars, sowie weiter funktionalisierte Fullerene (und ggf. Kohlenstoff-Nanotubes) im Rahmen der Erfindung geeignete Fullerene, so lange sie über eine ausreichende Stabilität verfügen, um den gängigen Anforderungen der Ski-Industrie an die Haltbarkeit der Lauffläche genügen.

Überraschenderweise wurde nun eine Verbesserung der Gleiteigenschaften von Laufflächen durch den Zusatz von Fullerenen gefunden, und dies bereits bei einem Zusatz von weniger als 10 Gew.-%, vorzugsweise von weniger als 5 Gew.-%, bspw. lediglich 0.02 Gew.-% bis 5 Gew.-%, vorzugsweise von 0.02 Gew.-% bis 1 Gew.-%, besonders bevorzugt von 0.05 Gew.-% bis 0.5 Gew.-%, bezogen auf 100 Gewichtsteile des Kunststoffs.

Die Fullerene werden in möglichst reiner Form als Zusatz zu einer erfindungsgemässen Lauffläche verwendet. Vorzugsweise besteht der Kohlenstoffgehalt des Fulleren-Zusatzes im wesentlichen lediglich aus Fullerenen. Fullerene können in reiner Form und als Mischungen solcher Fullerene im Handel in hoher Reinheit bezogen werden. Derartige isolierte, reine Fullerene oder Mischungen derartiger Fullerene können im Rahmen der Erfindung bevorzugt verwendet werden.

Fullerene lösen sich in organischen Lösungsmitteln unter teilweise charakteristischer Färbung. Auch in der gängigen Kunststoffmatrix für Laufflächen, Polyethylen (PE), liegen Fullerene in "gelöster" Form vor.

Darüber hinaus ermöglicht die teilweise charakteristische Färbung von Fulleren-Lösungen die Bereitstellung von nicht-schwarzen Laufflächen, deren Farbe je nach verwendetem Fulleren variiert werden kann. Eine derartige nicht-schwarze Farbgestaltung ist mit den derzeit verwendeten, hohen Beimengungen von Russ und/oder Graphit nicht möglich.

Die Haltbarkeit von Laufflächen beinhaltend insbesondere bspw. die gängigen Fullerene C₆₀ und C₇₀ als Hauptbestandteile des Fulleren-Zusatzes erfüllt zudem die Haltbarkeits-Anforderungen der Ski-Industrie: Binnen zwei Jahren nach der Herstellung wurde an den Eigenschaften von Laufflächen mit derartigen Zusätzen keinerlei signifikante Veränderung festgestellt. Dies beruht ggf. ebenfalls darauf, dass die Fullerene in "gelöster" Form in der Kunststoffmatrix der Lauffläche, insbesondere der Polyethylenmatrix eingebettet sind.

Gemäss einer besonders bevorzugen Ausführungsform ist die Lauffläche im wesentlichen aufgebaut aus einem Kunststoff, insbesondere Polyethylen (PE). Besonders bevorzugt wird *ultra high molecular weight* (UHMW) Polyethylen (PE) eingesetzt, beispielsweise mit einem Molekulargewichtsbereich von etwa 2 x 10⁶ g/mol bis etwa 15 x 10⁶ g/mol. Eine erfindungsgemässe Lauffläche wird vorzugsweise im Press-Sinterverfahren hergestellt. Es ist aber selbstverständlich auch möglich, eine erfindungsgemässe Lauffläche bspw. mittels Extrusion herzustellen, bspw. von Polyethylen (PE) mit einem Molekulargewicht von etwa 2 x 10⁵ g/mol bis 8 x 10⁵ g/mol. Die Auswahl weiterer hydrophober Kunststoffmaterialien, welche als Ersatz von oder Zusatz zu Polyethylen (PE) im Rahmen der Erfindung verwendet werden können, entspricht der Routine des Fachmanns.

Gemäss einer weiteren bevorzugten Ausführungsform der Erfindung, kann der erfindungsgemässen Lauffläche ein oder mehrere weitere Zusätze, insbesondere ausgewählt aus der Gruppe bestehend aus Russ, Graphit, Bor, Borverbindungen, Nitriden und Fluorgraphit beigefügt sein. In Versuchen wurde festgestellt, dass insbesondere durch einen synergistischen Effekt derartiger Zusätze mit Fullerenen eine weitere Verbesserung der Gleiteigenschaften bewirkt werden kann.

Die Erfindung betrifft weiter eine Zusammensetzung für die Herstellung einer vorstehend beschriebenen Lauffläche, umfassend einen Kunststoff, insbesondere Polyethylen (PE) und mindestens ein oder mehrere Fulleren(e) sowie die Verwendung eines oder mehrerer Fullerene als Zusatz zu der Lauffläche eines Wintersportgeräts.

Das Verfahren zur Herstellung einer erfindungsgemässen Lauffläche für ein Wintersportgerät ist vorzugsweise ein Sinter, insbesondere Press-Sinter- oder Extrusionsverfahren, umfassend den Schritt der Beimischung eines Zusatzes mindestens eines oder mehrerer Fulleren(e).

Die Erfindung wird nachfolgend exemplarisch durch bevorzugte Ausführungsbeispiele erläutert, ohne dass die Erfindung hierauf zu beschränken wäre.

### Beispiel 1 (Vergleichsbeispiel, Stand der Technik):

15 Gewichtsteile Russ *Printex A* (Degussa) mit einer Teilchengrösse von 20 nm und 85 Gewichtsteilen Niederdruck Polyethylen Hostalen GUR 4120 (Molekulargewicht von 5 x 10⁶) werden in einem Mischer 20 min. innig vermischt und anschliessend in einer zylindrischen Pressform unter Standardbedingungen, wie bspw. in der Broschüre von Hoechst, "Hostalen GUR" [HKR112-7089C12299/14] angegeben, zu einem homogenen zylindrischen Sinterkörper pressgesintert. Nach dem Abkühlen wird von dem Sinterkörper ein zusammenhängendes Band - die Lauffläche - in der gewünschten Dicke von bspw. 1.5 mm abgeschält. Diese wird danach einseitig aufgeraut und durch eine oxidierend Flamme für die Verklebung mit dem Wintersportgerät vorbereitet.

### Beispiel 2 (gemäss der Erfindung):

Gemäss einem zu Beispiel 1 analogen Verfahren werden 100 Gewichtsteile Hostalen GUR 4170 mit 0.1 Gewichtsteilen einer Fulleren-Mischung (beinhaltend: C₆₀ (77 Gew.-%), C₇₀ (20 Gew.-%), C₇₆ (1 Gew.-%), C₇₈ (1 Gew.-%), C₈₄ (1 Gew.-%)) zu einer Lauffläche verarbeitet. Die Lauffläche weist eine orangerot-bräunliche, transluszente, homogene Farbe auf.

### Beispiel 3 (gemäss der Erfindung):

Gemäss einem zu Beispiel 1 analogen Verfahren werden 100 Gewichtsteile Hostalen GUR 4150 mit 0.1 Gewichtsteilen einer Fulleren-Mischung (beinhaltend: C₆₀ (77 Gew.-%), C₇₀ (20 Gew.-%), C₇₆ (1 Gew.-%), C₇₈ (1 Gew.-%), C₈₄ (1 Gew.-%)) sowie 1 Gewichtsteil Bornitridpulver (spez. Oberfläche von 6.3 m²/g, CAS-Nummer 10043-11-5) zu einer Lauffläche verarbeitet. Die Lauffläche weist eine orangerot-bräunliche, opake Farbe auf.

### Messwerte, Physikalische Eigenschaften

Die Laufflächen gemäss der Beispiele 1 bis 3 wurden auf einige charakteristische physikalische Eigenschaften untersucht (Tabelle 1). Die gefundenen Resultate für die erfindungsgemässen Ausführungsformen gemäss den Beispielen 2 und 3 sind mit denen des Vergleichsbeispiels 1 vergleichbar und deuten bereits auf ähnliche oder verbesserte Gleiteigenschaften hin:

**Tabelle 1: Ausgewählte physikalische Eigenschaften der Laufflächen gemäss den Beispielen 1 bis 3.**

| **Eigenschaft** | **Messmeth.** | **Messwert Beispiel 1** | **Messwert Beispiel 2** | **Messwert Beispiel 3** |
|---|---|---|---|---|
| **Dichte[g/cm**^{**3**}**]** | DIN 53479 | 1.0019±0.0008 | 0.9275±0.0013 | 0.9401±0.0004 |
| **Schmelzpeakmin. [°C]** | DSC | 136 | 136 | 136.5 |
| **Schmelzenthalpie [J/g]** | DSC | 92.4 | 97.1 | 102 |

### Gleiteigenschaften:

Es wurden Skis hergestellt, ausgestattet mit Laufflächen gemäss der vorstehenden Beispiele 1 bis 3. Abgesehen von den unterschiedlichen Laufflächen wurden die Skier identisch aufgebaut. Die Skier, welche mit den erfindungsgemässen Laufflächen gemäss Beispiel 2 und 3 ausgestattet waren, lieferten vergleichbare oder verbesserte Gleitresultate wie ein mit einer Lauffläche gemäss Vergleichsbeispiel 1 ausgestatteter Ski.

## Patentansprüche

1. Lauffläche für ein Wintersportgerät, **dadurch gekennzeichnet, dass** Sie einen Zusatz von mindestens einem oder mehreren Fulleren(en) enthält.

2. Lauffläche gemäss Anspruch 1,
hergestellt aus und/oder im wesentlichen beinhaltend einen insbesondere hydrophoben Kunststoff, vorzugsweise Polyethylen (PE).

3. Lauffläche gemäss einem der Ansprüche 1 oder 2,
**dadurch gekennzeichnet, dass** der Zusatz von mindestens einem oder mehreren Fullerenen als Hauptbestandteil das Fulleren C₆₀ aufweist.

4. Lauffläche gemäss einem der Ansprüche 2 bis 3,
**dadurch gekennzeichnet, dass** der Zusatz von mindestens einem oder mehreren Fullerenen insgesamt einen Anteil von weniger als 10 Gew.-%, vorzugsweise von weniger als 5 Gew.-%, insbesondere lediglich 0.02 Gew.-% bis 5 Gew.-%, vorzugsweise von 0.02 Gew.-% bis 1 Gew.-%, besonders bevorzugt von 0.05 Gew.-% bis 0.5 Gew.-% ausmacht, bezogen auf 100 Gewichtsteile des Kunststoffs.

5. Lauffläche gemäss einem der Ansprüche 1 bis 4,
weiter beinhaltend einen oder mehrere Zusätze, insbesondere ausgewählt aus der Gruppe bestehend aus Russ, Graphit, Bor, Borverbindungen, Nitriden, und Fluorgraphit.

6. Wintersportgerät mit einer Lauffläche gemäss einem der Ansprüche 1 bis 5.

7. Zusammensetzung für die Herstellung einer Lauffläche gemäss einem der Ansprüche 1 bis 5, umfassend einen Kunststoff, insbesondere Polyethylen (PE) und mindestens ein oder mehrere Fulleren(e).

8. Verwendung eines oder mehrerer Fullerene als Zusatz zu der Lauffläche eines Wintersportgeräts.

9. Verfahren zur Herstellung einer Lauffläche für ein Wintersportgerät, insbesondere in einem Sinter- oder Extrusionsverfahren, umfassend den Schritt der Beimischung eines Zusatzes mindestens eines oder mehrerer Fulleren(e).

## Claims

1. A sole for a winter sports device **characterised in that** it contains an additive of at least one or more fullerenes.

2. A sole according to claim 1 produced from and/or substantially containing an in particular hydrophobic plastic material, preferably polyethylene (PE).

3. A sole according to one of claims 1 and 2 **characterised in that** the additive of at least one or more fullerenes has as a main constituent the fullerene C₆₀.

4. A sole according to one of claims 2 to 3 **characterised in that** the additive of at least one or more fullerenes constitutes overall a proportion of less than 10% by weight, preferably less than 5% by weight, particularly only 0.02% by weight to 5% by weight, preferably 0.02% by weight to 1% by weight, particularly preferably 0.05% by weight to 0.5% by weight, with respect to 100 parts by weight of the plastic material.

5. A sole according to one of claims 1 to 4 further including one or more additives, in particular selected from the group consisting of carbon black, graphite, boron, boron compounds, nitrides and fluorographite.

6. A winter sports device comprising a sole according to one of claims 1 to 5.

7. A composition for the production of a sole according to one of claims 1 to 5 comprising a plastic material, in particular polyethylene (PE) and at least one or more fullerenes.

8. Use of one or more fullerenes as an additive to the sole of a winter sports device.

9. A process for the production of a sole for a winter sports device, in particular using a sintering or extrusion process, comprising the step of adding an additive of at least one or more fullerenes.

## Revendications

1. Semelle pour un équipement de sports d'hiver, **caractérisée en ce qu'**elle comprend un additif constitué par un ou plusieurs fullerènes.

2. Semelle selon la revendication 1, fabriquée à partir de et/ou comprenant essentiellement une matière plastique particulièrement hydrophobe, de préférence du polyéthylène (PE).

3. Semelle selon l'une des revendications 1 et 2, **caractérisée en ce que** l'additif constitué par un ou plusieurs fullerènes comprend en tant que constituant principal, du fullerène C₆₀.

4. Semelle selon l'une des revendications 2 et 3, **caractérisée en ce que** l'additif constitué par une ou plusieurs charges représente au total une fraction de moins de 10 % en poids, de préférence de moins de 5 % en poids, en particulier seulement de 0,02 à 5 % en poids, de préférence de 0,02 à 1 % en poids, de manière particulièrement préférée de 0,05 à 0,5 % en poids, par rapport à 100 parties en poids de la matière plastique.

5. Semelle selon l'une des revendications 1 à 4, comprenant en outre un ou plusieurs additifs, choisis en particulier dans le groupe constitué par le noir de carbone, le graphite, le bore, des composés de bore, des nitrures et le graphite fluoré.

6. Equipement de sports d'hiver avec une semelle selon l'une des revendications 1 à 5.

7. Composition pour la fabrication d'une semelle selon l'une des revendications 1 à 5, comprenant une matière plastique, en particulier du polyéthylène (PE) et un ou plusieurs fullerènes.

8. Utilisation d'un ou plusieurs fullerènes en tant qu'additif dans la semelle d'un équipement de sports d'hiver.

9. Procédé de fabrication d'une semelle pour un équipement de sports d'hiver, en particulier dans un procédé de frittage ou d'extrusion, comprenant l'étape consistant à ajouter un additif constitué par un ou plusieurs fullerènes.
